# EUROPÄISCHE PATENTSCHRIFT

(11) **EP 1 345 801 B1**
(45) Veröffentlichungstag und Bekanntmachung des Hinweises auf die Patenterteilung: **24.11.2004**
(21) Anmeldenummer: 01989596.0
(22) Anmeldetag: 13.12.2001
(51) Int. Cl.: B61H 5/00, F16D 55/224

(54) **BREMSAKTUATOR MIT ENERGIESPEICHER UND SCHWUNGMASSE**
BRAKE ACTUATOR COMPRISING AN ENERGY ACCUMULATOR AND AN INERTIA WEIGHT
ACTIONNEUR DE FREIN A ACCUMULATEUR D'ENERGIE ET MASSE D'INERTIE

(30) Priorität: 19.12.2000 DE 10063229; 12.02.2001 DE 10106373
(43) Veröffentlichungstag der Anmeldung: 24.09.2003
(73) Patentinhaber: KNORR-BREMSE Systeme für Schienenfahrzeuge GmbH, 80809 München (DE)
(72) Erfinder: KRUG, Rita, 80798 München (DE); FRIESEN, Ulf, 81739 München (DE); STALTMEIR, Josef, 80807 München (DE)
(86) Internationale Anmeldenummer: PCT/EP2001/014681
(87) Internationale Veröffentlichungsnummer: WO 2002/049901

(56) Entgegenhaltungen:
- EP-A- 0 247 733
- EP-A- 0 334 434
- WO-A-98/47750
- DE-A- 3 423 510

## Beschreibung

### Stand der Technik

Die Erfindung geht aus von einem Bremsaktuator, insbesondere für eine Schienenfahrzeugbremse, nach der Gattung des Patentanspruchs 1.

Im wesentlichen werden derzeit im Schienenfahrzeugbereich drei Radbremssysteme eingesetzt : Pneumatische oder elektro-pneumatische Bremssysteme, hydraulische oder elektro-hydraulische Bremssysteme sowie mechanische oder elektro-mechanische Bremssysteme. Das Radbremssystem kann dabei als aktives oder passives Bremssystem ausgeführt sein, je nachdem ob die Kraft des Bremsaktuators zum Einbremsen (aktives Bremssystem) oder zum Lösen der Bremse (passives Bremssystem) aufgebracht werden muß. Für den Fall von Betriebsstörungen erfolgt bei pneumatischen Systemen eine Energiespeicherung in Druckluftbehältern, bei hydraulischen Systemen in Hydrobehältern und bei elektro-mechanischen Systemen in Form von Speicherfedern.

Aus dem Stand der Technik sind elektro-mechanische Schienenfahrzeugbremsen bekannt, welche eine Betriebsbremseinheit sowie eine Speicherbremseinheit mit einem Energiespeicher aufweisen. Die Betriebsbremseinheit beinhaltet einen Bremskrafterzeuger zum Zuspannen und/oder Lösen der Bremse, beispielsweise in Form eines elektromotorischen Antriebs. Die Speicherbremseinheit umfaßt mindestens einen Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Die Speicherbremseinheit ist im allgemeinen als Federspeicherbremse ausgebildet. Ein Kraftumsetzer sorgt für eine Umsetzung der vom Bremskrafterzeuger und/oder vom Energiespeicher abgegebenen Energie in eine Bremszuspannbewegung und umfaßt beispielsweise eine vom elektromotorischen Antrieb getriebene Bremsspindel.

Bei Auslösung der Federspeicherbremse im Park- oder Notbremsfall wird die in der Speicherfeder gespeicherte potentielle Energie schlagartig freigesetzt und in eine hohe kinetische Energie der Elemente des Kraftumsetzers umgewandelt, welche nach Erreichen der Bremsstellung ebenfalls schlagartig verzögert werden. Hierbei ist das Bremssystem großen Kräften ausgesetzt, welche zu vorzeitigem Verschleiß oder Beschädigung führen können.

In der DE 34 23 510 A ist ein gattungsgemäßer Bremsaktuator, insbesondere für eine Schienenfahrzeugbremse offenbart, beinhaltend eine Speicherbremseinheit mit einem Energiespeicher zum Speichern und Abgeben von Energie zum Zuspannen der Bremse vorzugsweise im Sicherheits- und/oder Parkbremsfall, und mit einer Verriegelungseinrichtung zum Ver- und Entriegeln des Energiespeichers, wobei nach Lösen der Verriegelungseinrichtung von einem Teil der aus dem Energiespeicher freiwerdenden Energie eine Schwungmasse zu Dämpfungszwecken in Drehbewegung versetzbar ist.

Die Schwungmasse besteht dabei aus einem Gehäuse, welches im Notbremsfall durch den sich entspannenden Energiespeicher in Rotation versetzt wird. Die genannte Schrift zitiert außerdem einen Stand der Technik, bei welchem der Läufer eines Elektromotors bei einer Notbremsung in Rotation versetzt wird. Beide Lösungen haben jedoch den Nachteil, dass es sich bei den in Rotation versetzten Bauteilen, nämlich dem Gehäuse einerseits und dem Elektromotorläufer andererseits um Komponenten handelt, welche vorrangig für andere Funktionen vorgesehen sind und ihre Funktion als im Notbremsfall zu beschleunigende Trägheitselemente erst in zweiter Linie erfüllen. Durch ihre jeweilig im Vordergrund stehende Funktion sind diese Komponenten jedoch an bestimmte Abmessungen bzw. an eine bestimmte Materialauswahl gebunden und hinsichtlich ihres Trägheitsmoments nicht beliebig variierbar.

Der vorliegenden Erfindung liegt demgegenüber die Aufgabe zugrunde, einen Bremsaktuator der eingangs erwähnten Art zu schaffen, welcher die oben genannten Nachteile überwindet.

Erfindungsgemäß wird diese Aufgabe dadurch gelöst, dass die Schwungmasse wenigstens ein separates, lediglich der Erzeugung von Massenträgheit dienendes Schwungelement umfasst.

Weil die bei Auslösung der Speicherbremse schlagartig freigesetzte potentielle Energie großteils in Rotationsenergie der Schwungmasse umgewandelt wird, reduziert sich die verbleibende kinetische Energie, mit welcher die Elemente des Kraftumsetzers in Bremszuspannrichtung beschleunigt werden können. Infolgedessen wird die auf das Bremssystem wirkende Stoßbelastung verringert, wodurch sich dessen Lebensdauer und Zuverlässigkeit erhöht. Vorzugsweise wird das Schwungelement durch eine separate Schwungscheibe gebildet. Das Trägheitsmoment dieses Schwungelements kann nun, da keiner weiteren Funktion verpflichtet, durch geeignete Wahl der Geometrie bzw. des Materials in einem weiten Bereich abhängig von den jeweiligen Anforderungen angepasst werden. Wenn beispielsweise für die Feststellbremse eine hohe Haltekraft gefordert wird, so muss die Speicherfeder groß dimensioniert sein, was allerdings zu einer hohen Stoßbelastung bei der Energiefreigabe führt. Zur Kompensation kann dann das erfindungsgemäße Schwungelement exakt an das zu Dämpfungszwecken benötigte Trägheitsmaß angepasst werden, ohne Rücksicht auf weitere Funktionen nehmen zu müssen.

Die Schwungmasse ist folglich zusätzlich zu eventuell bereits vorhandenen, ausschließlich zur Verriegelung der Speicherbremseinheit dienenden Rotationskörpern vorgesehen, die sich ebenfalls nach Lösen der Verriegelungsvorrichtung drehen. Die Schwungmasse weist insbesondere ein für eine merkliche Dämpfung der bei Lösen der Verriegelungsvorrichtung schlagartig erfolgenden Energiefreisetzung ausreichendes Massenträgheitsmoment auf. Im Vergleich zu linear bewegten Schwungmassen, die zur Erzeugung von nennenswertem Energieverzehr eine relativ lange Beschleunigungsstrecke brauchen, ist für rotatorische Schwungmassen weniger Bauraum nötig. Im Gegensatz zu Öldruck- oder Gasdruckstoßdämpfem ist die Rotationsschwungmasse zudem temperaturunabhängig einsetzbar.

Durch die in den Unteransprüchen aufgeführten Maßnahmen sind vorteilhafte Weiterbildungen und Verbesserungen des im Patentanspruch 1 angegebenen Bremsaktuators möglich.

Gemäß einer besonders zu bevorzugenden Maßnahme sind die vom Energiespeicher erzeugten Kräfte und/oder Momente bei verriegelter Verriegelungseinrichtung zumindest über einen Teil der Schwungmasse in ein Gehäuse des Bremsaktuators einleitbar und dort abstützbar.

Gemäß einer Weiterbildung ist dem Energiespeicher und der Schwungmasse ein Übersetzungsgetriebe mit vorzugsweise großem Übersetzungsverhältnis zwischengeordnet. Hierdurch werden die Kräfte, welche zur Arretierung der Schwungmasse in Lösestellung aufgebracht werden müssen, reduziert. Wenn die Schwungmasse beispielsweise durch elektro-magnetische Haltekräfte arretiert wird, reichen Magnetspulen mit geringerer Magnetkraft aus, wodurch der Stromverbrauch und die Erwärmung des Bremsaktuators sinken. Gleichzeitig erhöht sich aufgrund der großen Übersetzung die Drehzahl der Schwungmasse, welche in die Rotationsenergie quadratisch eingeht, so daß bei Auslösung der Speicherbremseinheit ein hoher Dämpfungsgrad gegeben ist.

Zweckmäßig kann die Schwungmasse mit dem Energiespeicher mittels einer Rutschkupplung lösbar gekoppelt sein, welche derart ausgelegt ist, daß nach

Erreichen einer Bremsstellung die Schwungmasse vom Energiespeicher entkoppelt ist. Falls die Schwungmasse und die Lagerreibungen so ausgelegt sind, daß sich die Schwungmasse nach Erreichen der Bremsstellung weiterdreht, kann durch diese Maßnahme ein allmählicher Abbau der in ihr gespeicherten Rotationsenergie stattfinden, was sich positiv auf die Lebensdauer des Bremsaktuators auswirkt.

### Zeichnungen

Ein Ausführungsbeispiel der Erfindung ist in den Zeichnungen dargestellt und in der nachfolgenden Beschreibung näher erläutert. Es zeigen :
Fig.1 eine Schnittdarstellung einer bevorzugten Ausführungsform eines erfindungsgemäßen Bremsaktuators in Lösestellung;
Fig.2 eine Verriegelungseinrichtung einer Speicherbremseinheit des Bremsaktuators als vergrößerter Ausschnitt von Fig.1.

### Beschreibung des Ausführungsbeispiels

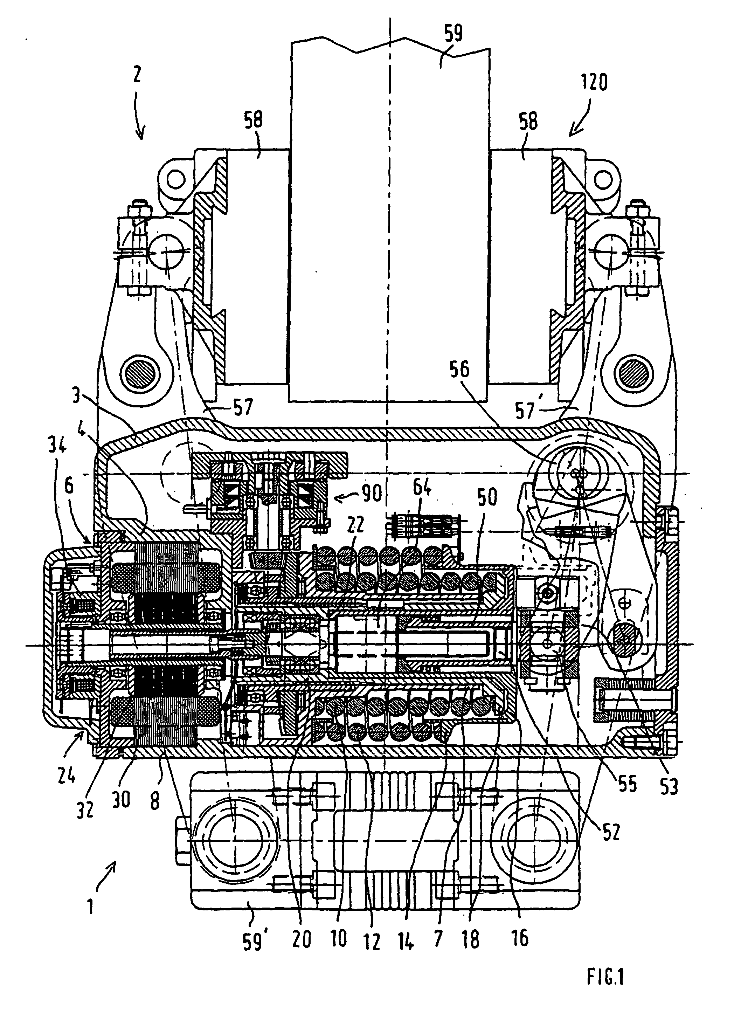

Die in Fig.1 insgesamt mit 1 bezeichnete und in einer Lösestellung gezeigte bevorzugte Ausführungsform eines Bremsaktuators dient als Antriebseinheit einer elektromechanischen Bremszuspanneinrichtung 2 eines Schienenfahrzeugs. Der Bremsaktuator 1 hat ein im wesentlichen hohlzylindrisches Aktuatorgehäuse 3, das zu einem axialen Ende hin von einem Deckelabschnitt 4 abgeschlossen wird, welcher eine endseitige Öffnung 6 aufweist. Ausgehend vom Deckelabschnitt 4 ist das Aktuatorgehäuse 3 im wesentlichen doppelwandig ausgebildet, wobei in dem Raum zwischen einer inneren Wandung 7 und einer äußeren Wandung 8 eine innere Speicherfeder 10 und eine hierzu koaxiale äußere Speicherfeder 12 angeordnet sind, wobei die äußere Speicherfeder 12 die innere Speicherfeder 10 umschließt.

Die Speicherfedem 10, 12 sind vorzugsweise als Schraubenfedem ausgebildet und stützen sich jeweils mit ihrem einen Ende am Aktuatorgehäuse 3 ab. Die äußere Speicherfeder 12 stützt sich mit ihrem anderen Ende auf einem Ringkragen 14 einer äußeren Schiebehülse 16, die innere Speicherfeder 10 mit ihrem anderen Ende auf einem Ringkragen 18 einer inneren Schiebehülse 20 ab, wobei die innere Schiebehülse 20 der äußeren Schiebehülse 16 und der inneren Wandung 7 des Aktuatorgehäuses 3 zwischengeordnet ist. Ferner sind die innere und die äußere Schiebehülse 16, 20 in axialer Richtung aneinander und die innere Schiebehülse 20 an einer radial inneren Umfangsfläche der inneren Wandung 7 des Aktuatorgehäuses 3 verschieblich geführt, wobei die äußere Schiebehülse 16 in der Lösestellung an einem axialen Anschlag 22 der inneren Schiebehülse 20 zur Anlage kommt. Ferner überragt der Ringkragen 14 der äußeren Schiebehülse 16 den Ringkragen 18 der inneren Schiebehülse 20 in axialer und radialer Richtung.

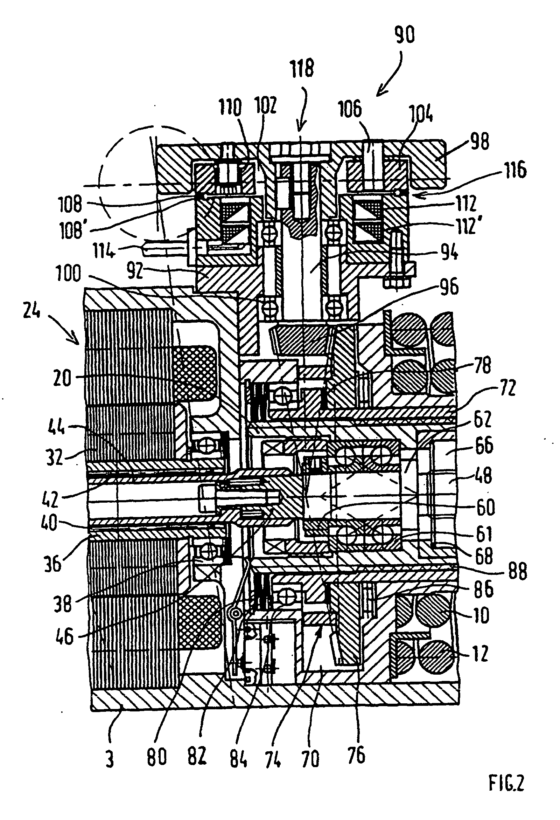

Im Deckelabschnitt 4 ist an der von den Speicherfedern 10, 12 abgewandten Seite ein im Vierquadrantenbetrieb betreibbarer SR-Motor 24 (switched reluctance motor) aufgenommen. Der SR-Motor 24 beinhaltet einen radial äußeren, gehäusefesten Stator 30, welcher einen Rotor 32 umschließt, der mittels einer Haltebremse 34, vorzugsweise einer Permanentmagnetbremse abbremsbar ist, welche stromlos geschlossen und bestromt geöffnet ist. Wie am besten anhand von Fig.2 zu sehen ist, sitzt der Rotor 32 auf einer Hohlwelle 36, die über Kugellager 38 im Aktuatorgehäuse 3 drehbar gelagert und an ihrer radial inneren Umfangsfläche mit einer axial verlaufenden Keilwellenverzahnung 40 versehen ist, in welche radial äußere und in Axialrichtung verlaufende Flügel 42 einer Zwischenhülse 44 eingreifen. Infolgedessen ist die Zwischenhülse 44 relativ zur Hohlwelle 36 unverdrehbar aber axial verschieblich geführt.

Ein endseitiger Zapfen 46 einer Bremsspindel 48 ragt koaxial in ein den Speicherfedern 10, 12 zugewandtes Ende der Zwischenhülse 44 und ist dort dreh- und axialfest gehalten. Das andere Ende der Bremsspindel 48 ragt in einen becherförmigen Abschnitt 50 eines Pleuels 52 für einen Exzenterhebel 53 hinein, wie Fig.1 zeigt. Der becherförmige Abschnitt 50 des Pleuels 52 ist in der äußeren Schiebehülse 16 axialfest gehalten, kann aber durch eine Kugelkalotte seitlich ausschwenken. An die von den Speicherfedern 10, 12 abgewandte Stirnseite des Pleuels 52 ist ein Auge angeformt, in das ein Bolzen 55 eingreift, welcher mit einem Ende des Exzenterhebels 53 einer Exzenteranordnung verbunden ist. Die Exzenteranordnung weist eine Exzenterwelle 56 auf, die an einen Zangenhebel 57 angelenkt ist, der zusammen mit einem weiteren Zangenhebel 57' eine Bremszange bildet. An den einen Enden der Zangenhebel 57, 57' sind jeweils Belaghalter mit Bremsbelägen 58 angeordnet, die in Richtung der Achse einer Bremsscheibe 59 verschieblich sind. Die von den Bremsbelägen 58 abgewandt liegenden Enden der Zangenhebel 57,57' sind miteinander über einen Druckstangensteller 59' verbunden, der vorzugsweise elektrisch betätigt ausgelegt ist.

Wie aus Fig.2 hervorgeht, ist die Bremsspindel 48 innerhalb der inneren Schiebehülse 20 drehbar gelagert, vorzugsweise mittels eines zweireihigen Rillenkugellagers 61, welches sowohl Axial- als auch Radialkräfte aufnehmen kann und von welchem ein Innenring durch eine auf einen Außengewindeabschnitt der Bremsspindel 48 aufgeschraubte Mutter 60 gegen eine Schulter 62 der Bremsspindel 48 gespannt und dadurch an der Bremsspindel 48 dreh- und axialfest gehalten wird. Ein Außenring des Rillenkugellagers 61 ist in der inneren Schiebehülse 20 ebenfalls dreh- und axialfest gehalten.

Die Bremsspindel 48 ist von einer Mutter/Spindelbaueinheit 64 umfaßt, die vorzugsweise als Wälzegewindetrieb wie beispielsweise Kugelumlaufspindel, Rollengewindetrieb, Gewinderollenschraubtrieb oder als Planeten-Wälzgewindetrieb ausgebildet sein kann. Der becherförmige Abschnitt 50 des Pleuels 52 ist dabei in die äußere Schiebehülse 16 soweit eingesetzt, daß die Mutter 66 der Mutter/Spindelbaueinheit 64 zwischen einem radial inneren Ansatz 68 der äußeren Schiebehülse 16 und einer Stirnfläche des becherförmigen Abschnitts 50 des Pleuels 52 eingespannt ist, so daß sie diesem gegenüber verdrehsicher gehalten ist. Bei Drehungen der Bremsspindel 48 wird daher die Mutter 66 entlang der Bremsspindel 48 translatorisch geführt und nimmt dabei die äußere Schiebehülse 16 und den Pleuel 52 mit.

Im Deckelabschnitt 4 des Aktuatorgehäuses 2 ist ein Ringraum 70 ausgebildet, in welchem ein mit einer Verriegelungsmutter 72 durch eine Rutschkupplung 74 in treibender Verbindung stehendes Tellerrad 76 koaxial zur Bremsspindel 48 aufgenommen ist. Das Tellerrad 76 sitzt auf der radial äußeren Umfangsfläche der Verriegelungsmutter 72 und ist mit dieser durch die Rutschkupplung 74 bis zu einem oberen Grenzdrehmoment drehfest verbunden. Die Rutschkupplung 74 wird vorzugsweise durch axial ineinander greifende Stimverzahnungen 78 am Tellerrad 76 und an der Verriegelungsmutter 72 gebildet, wobei ein sich am Aktuatorgehäuse 3 durch einen Sprengring 80 axial abstützendes Tellerfederpaket 82, welches auf ein radiales Rillenkugellager 84 wirkt, das die Verriegelungsmutter 72 relativ zum Aktuatorgehäuse 3 lagert, die für einen Kraft- und Formschluß der Stirnverzahnungen 78 notwendige Axialkraft bereitstellt. Das Tellerrad 76 ist an seiner von den Stimverzahnungen 78 weg weisenden Seite durch ein Axialnadellager 86 gegenüber dem Aktuatorgehäuse 3 axial gelagert. Die Verriegelungsmutter 72 umschließt die innere Schiebehülse 20 und ist auf dieser mittels eines nicht-selbsthemmenden Gewindes 88 drehbar gelagert.

Eine vorzugsweise elektro-magnetisch betätigbare Verriegelungsvorrichtung 90 hat ein Gehäuse 92, das an einer radialen Öffnung des Ringraumes 70 angeflanscht ist. Die Verriegelungsvorrichtung 90 umfaßt eine Welle 94, an deren radial innerem Ende ein Kegelrad 96 und an deren gegenüberliegenden, radial äußeren Ende eine zylindrische Schwungscheibe 98 angeordnet ist. Das Kegelrad 96 kämmt mit der Verzahnung des Tellerrades 76 und bildet mit diesem ein Kegelradgetriebe, welches vorzugsweise ein relativ hohes Übersetzungsverhältnis aufweist, weiches beispielsweise in einem Bereich von 3,0 bis 8,0 liegt. Die Welle 94 ist im Gehäuse 92 der Verriegelungsvorrichtung 90 durch Rillenkugellager 100 drehbar gelagert, wobei die Welle 94 senkrecht zur Bremsspindel 48 angeordnet ist.

Die Schwungscheibe 98 hat an ihrer zur Bremsspindel 48 weisenden Stirnfläche eine Ringausnehmung 102 für einen Ring 104, der koaxial zur Welle 94 angeordnet und entlang sich in axialer Richtung erstreckenden Zapfen 106 verschieblich aufgenommen ist, wodurch er mit der Schwungscheibe 98 drehfest verbunden ist. Der Ring 104 weist außerdem an seiner von der Schwungscheibe 98 weg weisenden Stirnfläche einen radial äußeren Zahnkranz 108 auf, welcher einem weiteren, sich am Gehäuse 92 der Verriegelungsvorrichtung 90 abstützenden Zahnkranz 108' gegenüberliegt und durch die Wirkung von Druckfedern 110 von diesem weg gedrängt ist. Dem Ring 104 liegen im weiteren zwei im Gehäuse 92 der Verriegelungsvorrichtung 90 in Axialrichtung hintereinander angeordnete Magnetspulen 112, 112' gegenüber, welche durch einen elektrischen Anschluß 114 bestrombar sind. Der Ring 104, die beiden Zahnkränze 108, 108' und die beiden Magnetspulen 112, 112' bilden zusammen eine Magnetzahnbremse 116.

Bei bestromten Magnetspulen 112,122' entstehen magnetische Anziehungskräfte, die den Ring 104 gegen die Wirkung der Druckfedern 110 entlang der Zapfen 106 in axialer Richtung auf die Magnetspulen 112, 112' zu bewegen, wodurch der Zahnkranz 108 des Ringes 104 mit dem am Gehäuse 92 der Verriegelungsvorrichtung 90 gehaltenen Zahnkranz 108' in Eingriff kommt und somit eine drehfeste Verbindung mit diesem eingeht. Dann kann ein über das Tellerrad 76 in die Verriegelungsvorrichtung 90 eingeleitetes Drehmoment am Gehäuse 92 der Verriegelungsvorrichtung 90 abgestützt werden, wobei der Kraftfluß durch das Kegelrad 96, die Welle 94 und die Schwungsscheibe 98 läuft.

In Lösestellung der Magnetzahnbremse 116 sind die Magnetspulen 112, 112' dagegen unbestromt, so daß der Zahnkranz 108 des Ringes 104 durch die Wirkung der Druckfedern 110 mit dem am Gehäuse 92 der Verriegelungsvorrichtung 90 gehaltenen Zahnkranz 108' außer Eingriff kommt und infolgedessen sich das Tellerrad 76 zusammen mit dem Kegelrad 96, der Welle 94 und der Schwungscheibe 98 gegenüber dem Gehäuse 92 der Verriegelungsvorrichtung 90 frei drehen kann. Die Schwungscheibe 98, der Ring 104, die Welle 94 und das Kegelrad 96 bilden dann zusammen eine senkrecht zur Bremsspindel 48 oder zur Bremszuspannrichtung drehbare und bezogen auf die Rutschkupplung 74 jenseits der Verriegelungsmutter 72 angeordnete Schwungmasse 118, wobei der Anteil der Schwungscheibe 98 am Massenträgheitsmoment der Schwungmasse 118 aufgrund Ihres Radius am größten ist.

Der SR-Motor 24 bildet einen Bremskrafterzeuger, die weiteren Elemente des Kraftübertragungsweges vom SR-Motor 24 bis zu den Zangenhebeln 57,57' einen Bremskraftumsetzer 120. Besonders bevorzugt wird als Bremskrafterzeuger ein Elektromotor 24 eingesetzt. Alternativ könnte der Bremskrafterzeuger aber auch ein in eine oder zwei Betätigungsrichtungen wirkender hydraulischer oder pneumatischer Bremszylinder sein oder eine andere in eine oder zwei Richtungen wirkende Einheit. Die Verriegelungsvorichtung 90, die Permanentmagnetbremse 34 und der SR-Motor 24 sind von einer nicht dargestellten elektronischen Steuer- und Regeleinrichtung ansteuerbar. Vor diesem Hintergrund hat der Bremsaktuator 1 folgende Funktion :

In der in Fig.1 gezeigten Lösestellung des Bremsaktuators 1 sind die äußere und die innere Speicherfeder 10, 12 vorgespannt. Die Kraft der inneren Speicherfeder 10 wird von der inneren Schiebehülse 20 über das nicht-selbsthemmende Gewinde 88 auf die Verriegelungsmutter 72 und von dort über die Rutschkupplung 74 auf das Tellerrad 76 und die Schwungscheibe 98 übertragen. Infolge der Federkraft der inneren Speicherfeder 10 wird in dem nicht-selbsthemmenden Gewinde 88 ein Drehmoment erzeugt, d.h. die Verriegelungsmutter 72 möchte sich zusammen mit der Schwungmasse 118 drehen, was aber durch die bestromte und damit geschlossene Magnetzahnbremse 116 verhindert wird.

Die Kraft der äußeren Speicherfeder 12 wird von der äußeren Schiebehülse 16 an der Mutter 66 der Mutter/Spindelbaueinheit 64 abgestützt, obwohl die Mutter/Spindelbaueinheit 64 nicht-selbsthemmend ist. Denn das infolge der Kraft der äußeren Speicherfeder 12 in der Bremsspindel 48 entstehende Drehmoment wird über die in Lösestellung geschlossene Permanentmagnetbremse 34 in das Aktuatorgehäuse 3 eingeleitet. Von der Mutter 66 läuft der Kraftfluß über die Bremsspindel 48 und das zweireihige Rillenkugellager 61 in die innere Schiebehülse 20 und nimmt von dort aus den gleichen Weg in das Tellerrad 76 wie die Kraft der inneren Speicherfeder 10. Das bedeutet, daß in Lösestellung sowohl die äußere wie auch die innere Speicherfeder 10, 12 von der Verriegelungsvorrichtung 90 in gespanntem Zustand gehalten werden.

Beim Übergang von der Lösestellung zur einer Betriebsbremsung wird die Permanentmagnetbremse 34 durch die elektronische Steuer- und Regeleinrichtung bestromt, dadurch öffnet die Bremse 34 und ermöglicht eine Drehung des SR-Motors 24, welcher von der Steuer- und Regeleinrichtung ebenfalls mit elektrischer Energie versorgt wird. Durch die Drehung des Rotors 32 und der Bremsspindel 48 wird die Mutter 66 der Mutter/Spindelbaueinheit 64 zusammen mit der äußeren Schiebehülse 16 und dem Pleuel 52 in Betriebsbremsstellung ausgefahren. Diese Ausfahrbewegung des Pleuels 52 wird von der äußeren Speicherfeder 12 unterstützt, welche funktionsbezogen dem SR-Motor 24 parallelgeschaltet ist.

Die Ansteuerung des SR-Motors 24 durch die Steuer- und Regeleinrichtung und die äußere Speicherfeder 12 sind dabei derart aufeinander abgestimmt, daß die äußere Speicherfeder 12 alleine einen definierten Bremskraftwert erzeugt, welcher zwischen einer minimalen und einer maximalen Bremskraft liegt und einen Betriebsnullpunkt definiert. Der SR-Motor 24 ist im Betriebsnullpunkt stromlos geschattet. Die Größe der im Betriebsnullpunkt wirkenden Bremskraft ist daher unter anderem abhängig von der Federrate der äußeren Speicherfeder 12 und dem Grad der Vorspannung. Zum Erreichen der maximalen Bremskraft wird der SR-Motor 24 durch die Steuer- und Regeleinrichtung im Vierquadrantenbetrieb so gesteuert, daß er die äußere Speicherfeder 12 durch Drehen in Bremszuspannrichtung und durch Abgabe eines positiven Bremsmoments unterstützt, was beispielsweise einem Betrieb im ersten Quadranten entspricht. Zum Erreichen einer Bremskraft kleiner als im Betriebsnullpunkt dreht der SR-Motor 24 zwar in Bremszuspannrichtung, liefert jedoch ähnlich einem Generator ein negatives Drehmoment, welches über die Mutter/Spindelbaueinheit 64 gegen die äußere Speicherfeder 12 wirkt (Betrieb im zweiten Quadranten). Die innere Speicherfeder 10 ist bei der Erzeugung der Betreibsbremskraft nicht beteiligt und verbleibt in gespanntem Zustand, da die Verriegelungsmutter 72 durch die weiterhin bestromte Magnetzahnbremse 116 arretiert ist.

Das geregelte Einlegen der Feststell oder Parkbremse wird eingeleitet durch die oben beschriebene Betriebsbremsung bis zum Erreichen einer Bremskraft, die etwa 20% geringer ist als die mit der Feststellbremse zu erzielende Endkraft. Durch entsprechende Steuersignale der Steuereinrichtung wird der SR-Motor 24 stillgelegt, die Permanentmagnetbremse 34 durch Unterbrechung der Stromzufuhr geschlossen und die Magnetzahnbremse 116 durch Abschalten der Bestromung gelöst. Aufgrund der auf die innere Schiebehülse 20 wirkenden, von der inneren Speicherfeder 10 erzeugten Federkraft wird in dem nicht-selbsthemmenden Trapezgewinde 88 zwischen der Verriegelungsmutter 72 und der inneren Schiebehülse 20 ein Drehmoment erzeugt, welches von der nun frei drehbaren Schwungmasse 118 nicht mehr abgestützt wird. Folglich beginnt die Verriegelungsmutter 72 auf der inneren Schiebehülse 20 zu rotieren, welche sich daraufhin in Bremszuspannrichtung bewegt und über ihren axialen Anschlag 22 die äußere Schiebehülse 16 mit dem Pleuel 52 mitnimmt. Gleichzeitig kann sich die entriegelte äußere Schiebehülse 16 aufgrund der Federkraft der äußeren Speicherfeder 12 in Bremszuspannrichtung bewegen. Dabei ist unerheblich, ob die Permanentmagnetbremse 34 geöffnet oder geschlossen ist, da sich die Zwischenhülse 44 zusammen mit der Bremsspindel 48 bei diesem Vorgang in der Keilwellenverzahnung 40 der Hohlwelle 36 des Rotors 32 axial verschiebt. In der Feststellbremsstellung wirkt daher eine Gesamtbremskraft, welche sich aus der Summe der Federkräfte der beiden parallel wirkenden Speicherfedern 10, 12 ergibt.

Während der Bremszuspannbewegung wird die Rotation der Verriegelungsmutter 72 über das Kegelradgetriebe 76, 96 in eine mit höherer Drehzahl stattfindende Drehung der Schwungmasse 118 übersetzt, so daß ein großer Teil der potentiellen Energie der sich entspannenden Speicherfedern 10, 12 in Rotationsenergie umgewandelt wird. Wenn die Bremsstellung erreicht ist, kann die gesamte Energieversorgung abgeschaltet werden und das Schienenfahrzeug ist durch die Federkräfte der inneren und äußeren Speicherfeder 10, 12 zuverlässig in Feststellbremsstellung gehalten. Um die dadurch erzielte Feststellbremskraft über einen längeren Zeitraum aufrecht zu erhalten, darf bei der inneren und der äußeren Speicherfeder 10, 12 nur geringe Relaxation zugelassen werden. Vorzugsweise bestehen beide Speicherfedern 10, 12 aus hochfestem Siliziumfederdraht CrSiVa TH-381 HRA der Fa. Trefileurope.

Mit Erreichen der Bremsstellung stoppt die Rotation der Verriegelungsmutter 72. Die Rutschkupplung 74 zwischen Verriegelungsmutter 72 und Tellerrad 76 ist derart ausgelegt, daß das obere Grenzdrehmoment, ab dem eine Relativdrehung zwischen den Stirnverzahnungen 78 stattfinden kann, durch das Drehmoment aus dem Produkt des Massenträgheitsmoments der Schwungmasse 118 und der nach Durchlaufen des Bremsanlegehubes vorhandenen Verzögerung in Bremsendstellung überschritten wird, so daß die Schwungmasse 118 nach Erreichen der Bremsstellung zunächst weiterdrehen kann und im wesentlichen durch die zwischen den Stimverzahnungen 78 von Tellerrad 76 und Verriegelungsmutter 72 stattfindenden Reibung langsam zum Stillstand gebracht wird. Hierdurch kann ein allmählicher Abbau der in der Schwungmasse 118 gespeicherten Rotationsenergie stattfinden.

Falls die Stromversorgung des Bremsaktuators 1 und/oder die Steuer- und Regeleinrichtung und eine übergeordnete Fahrzeugsteuerung bei einer Betriebsbremsung ausfallen, werden die Magnetspulen 112, 112' der Verriegelungsvorichtung 90 nicht mehr bestromt, so daß die Druckfedern 110 den Ring 104 in Richtung Schwungscheibe 98 zurückziehen und damit die Magnetzahnbremse 116 lösen. Die daran anschließenden Ereignisse sind identisch mit den zuvor anläßlich einer Feststell- oder Parkbremsung beschriebenen, so daß auch für den Fall einer Notoder Sicherheitsbremsung sich die Gesamtbremskraft aus einer Summe der Federkräfte der beiden parallel wirkenden Speicherfedem 10, 12 ergibt.

Das Lösen der Bremse ausgehend von der Feststellbrems- oder Notbremsstellung erfolgt in zwei Schritten, wobei zunächst die innere Speicherfeder 10 gespannt wird. Die Permanentmagnetbremse 34 wird von der Steuer- und Regeleinrichtung bestromt und damit geöffnet und der SR-Motor 24 wird in Bremszuspannrichtung angetrieben. Dabei stützt sich die drehende Bremsspindel 48 an der Mutter 66 der Mutter/Spindelbaueinheit 64 ab und bewegt sich zusammen mit der inneren Schiebehülse 20 in Richtung auf die Lösestellung zu. Dabei rotiert die Verriegelungsmutter 72 auf der inneren Schiebehülse 20 bei geöffneter Verriegelungsvorrichtung 90. Bei Erreichen des gespannten Zustands der inneren Speicherfeder 10, weiche dem Zustand in der Lösestellung entspricht, wird der SR-Motor 24 durch die Steuer- und Regeleinrichtung gestoppt und die Verriegelungsvorichtung 90 durch Bestromen der Magnetspulen 112, 112' in Verriegelungsstellung gebracht. Aber auch bei schon bestromten Magnetspulen 112, 112' und damit geschlossener Verriegelungsvorrichtung 90 ist das Spannen der inneren Speicherfeder 10 möglich.

In einem weiteren Schritt wird die äußere Speicherfeder 12 gespannt, indem der SR-Motor 24 in Gegendrehrichtung, d.h. in Löserichtung betrieben wird, wobei sich die Bremsspindel 48 an der verriegelten inneren Schiebehülse 20 abstützt durch ihre Drehung die Mutter 66 der Mutter/Spindelbaueinheit 64 zusammen mit der äußeren Schiebehülse 16 in Richtung auf die Lösestellung zu schraubt. Anschließend wird der SR-Motor 24 abgeschaltet und die Permanentmagnetbremse 34 aktiviert.

### Bezugszahlenliste

- 1: Bremsaktuator
- 2: Bremszuspanneinrichtung
- 3: Aktuatorgehäuse
- 4: Deckelabschnitt
- 6: Bohrung
- 7: innere Wandung
- 8: äußere Wandung
- 10: innere Speicherfeder
- 12: äußere Speicherfeder
- 14: Ringkragen
- 16: äußere Schiebehülse
- 18: Ringkragen
- 20: innere Schiebehülse
- 22: axialer Anschlag
- 24: SR-Motor
- 30: Stator
- 32: Rotor
- 34: Haltebremse
- 36: Hohlwelle
- 38: Kugellager
- 40: Keilwellenverzahnung
- 42: Flügel
- 44: Zwischenhülse
- 46: Zapfen
- 48: Bremsspindel
- 50: becherförmiger Abschnitt
- 52: Pleuel
- 53: Exzenterhebel
- 55: Bolzen
- 56: Exzenterwelle
- 57: Zangenhebel
- 57': Zangenhebel
- 58: Bremsbeläge
- 59: Bremsscheibe
- 59': Druckstangensteller
- 60: Mutter
- 61: Rillenkugellager
- 62: Schulter
- 64: Mutter/Spindelbaueinheit
- 66: Mutter
- 68: Ansatz
- 70: Ringraum
- 72: Verriegelungsmutter
- 74: Rutschkupplung
- 76: Tellerrad
- 78: Stirnverzahnungen
- 80: Sprengring
- 82: Tellerfederpaket
- 84: Rillenkugellager
- 86: Axialnadellager
- 88: nicht-selbsthemmendes Gewinde
- 90: Verriegelungsvorrichtung
- 92: Gehäuse
- 94: Welle
- 96: Kegelrad
- 98: Schwungscheibe
- 100: Rillenkugellager
- 102: Ringausnehmung
- 104: Ring
- 106: Zapfen
- 108: Zahnkranz
- 108': Zahnkranz
- 110: Druckfedern
- 112: Magnetspule
- 112': Magnetspule
- 114: elektr. Anschluß
- 116: Magnetzahnbremse
- 118: Rotationsschwungmasse
- 120: Bremskraftumsetzer.

## Patentansprüche

1. Bremsaktuator, insbesondere für eine Schienenfahrzeugbremse, beinhaltend eine Speicherbremseinheit mit einem Energiespeicher (10) zum Speichern und Abgeben von Energie zum Zuspannen der Bremse vorzugsweise im Sicherheits- und/oder Parkbremsfall, und mit einer Verriegelungseinrichtung (90) zum Ver- und Entriegein des Energiespeichers (10), wobei nach Lösen der Verriegelungseinrichtung (90) von einem Teil der aus dem Energiespeicher (10) freiwerdenden Energie eine Schwungmasse (118) zu Dämpfungszwecken in Drehbewegung versetzbar ist, **dadurch gekennzeichnet, dass** die Schwungmasse (118) wenigstens ein separates, lediglich der Erzeugung von Massenträgheit dienendes Schwungelement (98) umfasst.

2. Bremsaktuator nach Anspruch 1, **dadurch gekennzeichnet, daß** die vom Energiespeicher (10) erzeugten Kräfte und/oder Momente bei verriegelter Verriegelungseinrichtung (90) zumindest über einen Teil der Schwungmasse (118) in ein Gehäuse (3) des Bremsaktuators (1) einleitbar und dort abstützbar sind.

3. Bremsaktuator nach Anspruch 2, **dadurch gekennzeichnet, daß** dem Energiespeicher (10) und der Schwungmasse (118) ein Übersetzungsgetriebe (76, 96) mit einem Übersetzungsverhältnis im Bereich von 3,0 bis 8,0 zwischengeordnet ist.

4. Bremsaktuator nach Anspruch 3, **dadurch gekennzeichnet, daß** die Schwungmasse (118) mit dem Energiespeicher (10) mittels einer Rutschkupplung (74) lösbar gekoppelt ist, weiche derart ausgelegt ist, daß nach Erreichen einer Bremsstellung die Schwungmasse (118) vom Energiespeicher (10) entkoppelt ist.

5. Bremsaktuator nach Anspruch 4, **dadurch gekennzeichnet, daß** das Schwungelement durch eine Schwungscheibe (98) gebildet wird und die Schwungmasse (118) weiterhin eine in einem Gehäuse (92) der Verriegelungseinrichtung (90) drehbar gelagerte Welle (94), sowie ein Kegelrad (96) umfaßt, wobei die Schwungsscheibe (98) an einem Ende der Welle (94), das Kegelrad (96) am anderen Ende der Welle (94) angeordnet ist und das Kegelrad (96) zusammen mit einem senkrecht zu ihm angeordneten Tellerrad (76) das Übersetzungsgetriebe bildet.

6. Bremsaktuator nach Anspruch 5, **dadurch gekennzeichnet, daß** das Tellerrad (76) durch die Rutschkupplung (74) mit einer koaxialen Verriegelungsmutter (72) drehfest koppelbar ist, die durch ein nicht-selbsthemmendes Gewinde (88) entlang eines in Bremszuspannrichtung linear verschieblichen Bremsbetätigungsorgans (20) schraubbar ist, auf welches der Energiespeicher (10) wirkt.

7. Bremsaktuator nach Anspruch 6, **dadurch gekennzeichnet, daß** die Rutschkupplung (74) durch aufgrund axialer Federvorspannung in drehfestem Eingriff gehaltene Axialstirnverzahnungen (78) von Tellerrad (76) und Verriegelungsmutter (72) gebildet wird.

8. Bremsaktuator nach Anspruch 7, **dadurch gekennzeichnet, daß** der Energiespeicher wenigstens eine Schraubenfeder (10) aufweist, welche sich einerseits an einem Gehäuse (3) des Bremsaktuators (1) und andererseits am Bremsbetätigungsorgan (20) abstützt.

9. Bremsaktuator nach Anspruch 8, **dadurch gekennzeichnet, daß** das Bremsbetätigungsorgan eine Hülse (20) beinhaltet, an deren Außenumfang das nicht-selbsthemmende Gewinde (88) ausgebildet ist.

10. Bremsaktuator nach Anspruch 9, **dadurch gekennzeichnet, daß** die Welle (94) der Schwungmasse (118) im wesentlichen senkrecht zur Axialrichtung der Schraubenfeder (10) verläuft.

11. Bremsaktuator nach Anspruch 10, **dadurch gekennzeichnet daß** die Verriegelungseinrichtung (90) eine Bremse (116) beinhaltet, welche an der Schwungmasse (118) und insbesondere an der Schwungscheibe (98) angreift.

12. Bremsaktuator nach Anspruch 11, **dadurch gekennzeichnet, daB** die Bremse durch eine elektromagnetisch betätigbare Magnetzahnbremse (116) gebildet wird, mit einem von der Schwungscheibe (98) axial verschieblich gehaltenen und von wenigstens einer Druckfeder (110) in Bremslösestellung gedrängten Ring (104) mit einem Zahnkranz (108), welcher durch Bestromen wenigstens einer Magnetspule (112, 112') gegen die Wirkung der Druckfeder (110) mit einem weiteren, sich am Gehäuse (3) des Bremsaktuators (1) abstützenden Zahnkranz (108') in Eingriff bringbar ist.

13. Bremsaktuator nach Anspruch 12, **dadurch gekennzeichnet, daß** der Ring (104) koaxial zur Welle (94) angeordnet und in einer axialen Ringausnehmung (102) der Schwungsscheibe (98) entlang sich von diesem in axialer Richtung erstreckenden Zapfen (106) verschieblich aufgenommen ist.

## Claims

1. Brake actuator, in particular for a railway vehicle brake, comprising a reserve brake unit with an energy store (10) for the storage and release of energy for applying the brakes preferably in the safety and/or parking braking situation, and with a locking device (90) for the locking and release of the energy store (10), such that when the locking device (90) is released a flywheel mass (118) is set into rotary motion by part of the energy released from the energy store (10) for damping purposes, **characterised in that** the flywheel mass (118) comprises at least one separate flywheel element (98) that serves only to provide a mass moment of inertia.

2. Brake actuator according to Claim 1, **characterised in that** the forces and/or moments produced by the energy store (10) when the locking device (90) is locked, can be transferred by at least part of the flywheel mass (118) to a housing (3) of the brake actuator (1) and can be supported thereby.

3. Brake actuator according to Claim 2, **characterised in that** a transmission gearset (76, 96) with a transmission ratio in the range 3.0 to 8.0 is arranged between the energy store (10) and the flywheel mass (118).

4. Brake actuator according to Claim 3, **characterised in that** the flywheel mass (118) is releasably coupled to the energy store (10) by means of a friction clutch (74), designed in such manner that when a braking position has been reached, the flywheel mass (118) is uncoupled from the energy store (10).

5. Brake actuator according to Claim 4, **characterised in that** the flywheel element is formed by a flywheel disc (98) and the flywheel mass (118) also comprises a shaft (94) mounted to rotate in a housing (92) of the locking device (90) and a conical bevel gear (96), such that the flywheel disc (98) is arranged at one end of the shaft (94), the conical bevel gear (96) is at the other end of the shaft (94), and the conical bevel gear (96) together with a spur bevel gear (76) arranged perpendicular thereto form the transmission gearset.

6. Brake actuator according to Claim 5, **characterised in that** the spur bevel gear (76) can be coupled rotationally fixed to a coaxial locking nut (72) by means of the friction clutch (74), the said nut being able to be screwed on a non self-locking thread (88) along a brake actuation element (20) that can be displaced linearly in the brake application direction, upon which the energy store (10) acts.

7. Brake actuator according to Claim 6, **characterised in that** the friction clutch (74) is formed by axial serrations (78) of the spur bevel gear (76) and the locking nut (72), held in rotationally fixed engagement under axial spring load.

8. Brake actuator according to Claim 7, **characterised in that** the energy store comprises at least one helical spring (10) which rests at one end against a housing (3) of the brake actuator (1) and at the other end against the brake actuation element (20).

9. Brake actuator according to Claim 8, **characterised in that** the brake actuation element is formed as a sleeve (20) on whose outer circumference the non-self-locking thread (88) is formed.

10. Brake actuator according to Claim 9, **characterised in that** the shaft (94) of the flywheel mass (118) extends essentially perpendicularly to the axial direction of the helical spring (10).

11. Brake actuator according to Claim 10, **characterised in that** the locking device (90) comprises a brake (116) which acts on the flywheel mass (118) and in particular on the flywheel disc (98).

12. Brake actuator according to Claim 11, **characterised in that** the brake is formed by an electromagnetically actuated magnetic toothed brake (116), having a ring (104) with a toothed rim (108) held by the flywheel disc (98) but able to move axially and be pushed to the brake release position by at least one compression spring (110), so that when at least one solenoid (112, 112') is energised, the said ring can be brought into engagement against the action of the compression spring (110) with another toothed ring (108') supported on the housing (3) of the brake actuator (1).

13. Brake actuator according to Claim 12, **characterised in that** the ring (104) is coaxial with the shaft (94) and is held in an axial annular recess (102) of the flywheel disc (98) in such manner that it can be displaced along pins (106) which extend from the latter in the axial direction.

## Revendications

1. Actionneur de frein, notamment pour un frein de véhicule ferroviaire, comprenant une unité de frein à accumulation pourvue d'un accumulateur (10) d'énergie pour emmagasiner et céder de l'énergie pour serrer le frein, de préférence dans le cas d'un freinage de sécurité et/ou de stationnement, et pourvue d'un dispositif (90) de verrouillage pour verrouiller et déverrouiller l'accumulateur (10) d'énergie, une masse (118) d'inertie pouvant, à la suite de la libération du dispositif (90) de verrouillage, être mise en rotation à des fins d'amortissement par une partie de l'énergie libérée par l'accumulateur (10) d'énergie, **caractérisé en ce que** la masse (118) d'inertie comprend au moins un élément (98) d'inertie séparé, servant uniquement à produire de l'inertie de masse.

2. Actionneur de frein suivant la revendication 1, **caractérisé en ce que** les forces et/ou couples produits par l'accumulateur (10) d'énergie, lorsque le dispositif (90) de verrouillage est verrouillé, peuvent être introduites au moins par l'intermédiaire d'une partie de la masse (118) d'inertie dans un boîtier (3) de l'actionneur (1 ) de frein, et y être supportées.

3. Actionneur de frein suivant la revendication 2, **caractérisé en ce qu'**une transmission (76, 96) multiplicatrice ayant un rapport de multiplication dans la plage de 3,0 à 8,0 est intercalée entre l'accumulateur (10) d'énergie et la masse (118) d'inertie.

4. Actionneur de frein suivant la revendication 3, **caractérisé en ce que** la masse (118) d'inertie est couplée de manière libérable à l'accumulateur (10) d'énergie au moyen d'un accouplement (74) à friction qui est conçu de telle sorte que la masse (118) d'inertie est désaccouplée de l'accumulateur (10) d'énergie une fois la position de freinage atteinte.

5. Actionneur de frein suivant la revendication 4, **caractérisé en ce que** l'élément d'inertie est formé par un volant (98) d'inertie et la masse (118) d'inertie comprend en outre un arbre (94) monté tournant dans un boîtier (92) du dispositif (90) de verrouillage, ainsi qu'une roue (96) conique, le volant (98) d'inertie étant disposé à une extrémité de l'arbre (94) et la roue (96) conique à l'autre extrémité de l'arbre (94), et la roue (96) conique formant la transmission multiplicatrice ensemble avec une couronne (76) disposée perpendiculairement à elle.

6. Actionneur de frein suivant la revendication 5, **caractérisé en ce que** la couronne (76) peut, par l'accouplement (74) à friction, être couplée en rotation solidaire à un écrou (72) de verrouillage coaxial qui, par un filetage (88) non autobloquant, peut être vissé le long d'un organe (20) d'actionnement de frein linéairement coulissant dans la direction de serrage du frein, organe sur lequel agit l'accumulateur (10) d'énergie.

7. Actionneur de frein suivant la revendication 6, **caractérisé en ce que** l'accouplement (74) à friction est formé par des dentures (78) droites axiales, maintenues en engagement en rotation solidaire du fait d'une précontrainte de ressort axiale, de la couronne (76) et de l'écrou (72) de verrouillage.

8. Actionneur de frein suivant la revendication 7, **caractérisé en ce que** l'accumulateur d'énergie comporte au moins un ressort (10) à boudin, qui s'appuie d'une part contre un boîtier (3) de l'actionneur (1) de frein et d'autre part contre l'organe (20) d'actionnement de frein.

9. Actionneur de frein suivant la revendication 8, **caractérisé en ce que** l'organe d'actionnement de frein comprend un manchon (20) sur le pourtour extérieur duquel est formé le filetage (88) non autobloquant.

10. Actionneur de frein suivant la revendication 9, **caractérisé en ce que** l'arbre (94) de la masse (118) d'inertie s'étend sensiblement perpendiculairement à la direction axiale du ressort (10) à boudin.

11. Actionneur de frein suivant la revendication 10, **caractérisé en ce que** le dispositif (90) de verrouillage comprend un frein (116) qui agit sur la masse (118) d'inertie et notamment sur le volant (98) d'inertie.

12. Actionneur de frein suivant la revendication 11, **caractérisé en ce que** le frein est formé par un frein (116) électrique à roue dentée, à actionnement électromagnétique, comportant une bague (104) maintenue à coulissement axial par le volant (98) d'inertie et poussée dans la position de desserrage du frein par au moins un ressort (110) de pression, bague qui est pourvue d'une couronne (108) dentée qui, par la mise sous tension d'au moins une bobine (112, 112') électromagnétique et à l'encontre de l'action du ressort (110) de pression, peut être amenée en engagement avec une autre couronne (108') dentée s'appuyant contre le boîtier (3) de l'actionneur (1) de frein.

13. Actionneur de frein suivant la revendication 12, **caractérisé en ce que** la bague (104) est disposée coaxialement à l'arbre (94) et est reçue dans un évidement (102) annulaire axial du volant (98) d'inertie, à coulissement le long de tenons (106) s'étendant en direction axiale à partir d'elle.
